# EUROPEAN PATENT APPLICATION

(11) **EP 2 814 205 A1**
(43) Date of publication of application: **17.12.2014**
(21) Application number: 13747150.4
(22) Date of filing: 05.02.2013
(51) Int. Cl.: H04L 12/24, H04L 12/28, H04L 12/46, H04L 12/70

(54) **COMPUTER SYSTEM AND METHOD FOR VISUALIZING VIRTUAL NETWORK**

(30) Priority: 10.02.2012 JP 2012027779
(71) Applicant: NEC Corporation, Tokyo 108-8001 (JP)
(72) Inventor: MASUDA, Takahisa, Tokyo 1088001 (JP)
(74) Representative: Reeve, Nicholas Edward
(86) International application number: PCT/JP2013/052523
(87) International publication number: WO 2013/118687

(57) **Abstract**

A computer system according to the present invention includes a managing unit which outputs a plurality of virtual networks managed by a plurality of controllers in a visually perceivable form with the plurality of virtual networks combined, on the basis of topology data of the virtual networks, the topology data being generated based on communication routes. This enables centralized management of the whole of a virtual network controlled by a plurality of controllers which use an OpenFlow technology.

## Description

### Technical Field

The present invention relates to a computer system and a visualization method of a computer system, more particularly, to a virtual network virtualization method of a computer system which uses an OpenFlow (also referred to as programmable flow) technology.

### Background Art

Conventionally, packet route determination and packet transfer from the source to the destination have been achieved by a plurality of switches provided on the route. In a recent large-sized network such as a data center, the network configuration is being continuously modified due to halts of devices caused by failures or additions of new devices for scale expansion. This has necessitated flexibility for promptly adapting to the modification of the network configuration to determine appropriate routes. It has been, however, impossible to perform a centralized control and management of the whole network, since the route determination programs installed on the switches have been unable to be externally modified.

On the other hand, a technology for achieving a centralized control of the transfer operations and the like in respective switches by using an external controller in a computer network (that is, the OpenFlow technique) has been proposed by the Open Networking Foundation (see non-patent literature 1). A network switch adapted to this technology (hereinafter, referred to as OpenFlow switch (OFS)) holds detailed information, including the protocol type, the port number and the like, in a flow table and allows a flow control and obtainment of statistic information.

In a system using the OpenFlow protocol, the setting of communication routes, transfer operations (relay operations) and the like to OFSs on the routes are achieved by an OpenFlow controller (also referred to as programmable flow controller and abbreviated to "OFC", hereinafter). In this operation, the OFC sets flow entries, which correlates rules for identifying flows (packet data) with actions defining operations to be performed on the identified flows, into flow tables held by the OFSs. OFSs on a communication route determine the transfer destination of received packet data in accordance with the flow entries set by the OFC, to achieve transmittals. This allows a client terminal to exchange packet data with another client terminal by using a communication route set by the OFC. In other words, an OpenFlow-based computer system, in which an OFC which sets communication routes is separated from OFSs which perform transmittals, allows a centralized control and management of communications over the whole system.

The OFC can control transfer among client terminals in units of flows which are defined by header data of L1 to L4, and therefore can virtualize a network in a desired form. This loosens restrictions on the physical configuration and facilitates establishment of a virtual tenant environment, reducing the initial investment cost resulting from scaling out.

When the number of terminals such as client terminals, servers and storages connected to an OpenFlow-based system is increased, the load imposed on an OFC which manages flows is increased. Accordingly, a plurality of OFCs may be disposed in a single system (network) in order to reduce the load imposed on each OFC. Also, in a system including a plurality of data centers, the network defined over the whole system are managed by a plurality of OFCs, because one OFC is usually disposed for each data center.

Systems in which one network is managed by a plurality of controllers are disclosed, for example, in JP 2011-166692 A (see patent literature 1), JP 2011-166384 A (see patent literature 2) and JP 2011-160363 A (see patent literature 3). Disclosed in patent literature 1 is a system in which the flow control of an OpenFlow-based network is achieved by a plurality of controllers which share topology data. Disclosed in patent literature 2 is a system which includes: a plurality of controllers which instruct switches on communication routes to set flow entries for which an ordering of priority is determined; and switches which determine based on the ordering of priority whether to set flow entries and provide relaying for received packets matching flow entries set thereto in accordance with the flow entries. Disclosed in patent literature 3 is a system which includes: a plurality of controllers 1 which instruct switches on communication routes to set flow entries; and a plurality of switches which specify one of the plurality of controllers 1 as a route deciding entity and perform relaying of received packets in accordance with flow entries set by the route deciding entity.

### Citation List

### Patent Literature

[Patent literature 1] JP 2011-166692 A
[Patent literature 2] JP 2011-166384 A
[Patent literature 3] JP 2011-160363 A

### Non-Patent Literature

[Non-patent literature 1] OpenFlow Switch Specification Version 1.1.0 Implemented (Wire Protocol 0x02), February 28, 2011

### Summary of Invention

When a single virtual network is managed by a plurality of controllers, it is impossible to monitor the whole virtual network managed by the plurality of controllers as a single virtual network, although each individual controller can monitor the status and the like of the virtual network managed by each controller. When one virtual tenant network "VTN1" is constituted with two virtual networks "VNW1" and "VNW2" respectively managed by two OFCs, for example, the statuses of the two virtual networks "VNW1" and "VNW2" can be monitored by the two OFCs, respectively. It has been, however, impossible to perform centralized monitoring of the status of the whole of the virtual tenant network "VTN1", since the two virtual networks "VNW1" and "VNW2" cannot be unified.

Accordingly, an objective of the present invention is to perform centralized management of the whole of a virtual network controlled by a plurality of controllers which use an OpenFlow technology.

A computer system in an aspect of the present invention includes a plurality of controllers, switches and a managing unit. Each of the plurality of controllers calculates communication routes and sets flow entries onto switches on the communication routes. The switches perform relaying of received packets in accordance with flow entries set in flow tables thereof. The managing unit outputs a plurality of virtual networks managed by the plurality of controllers in a visually perceivable form with the plurality of virtual networks combined, on the basis of topology data of the virtual networks, the topology data being generated based on the communication routes.

A virtual network visualization method in another aspect of the present invention is implemented over a computer system, including: a plurality of controllers which each calculate communication routes and set flow entries onto switches on the communication routes; and switches which perform relaying of received packets in accordance with the flow entries set in flow tables thereof. The virtual network visualization method according to the present invention includes steps of: by a managing unit, obtaining topology data of the plurality of virtual networks managed by the plurality of controllers, from the plurality of controllers; and by the managing unit, outputting the plurality of virtual networks in a visually perceivable form with the plurality of virtual networks combined, on the basis of topology data of the respective virtual networks.

The virtual network visualization method according to the present invention is preferably achieved by a visualization program executable by a computer.

The present invention enables centralized management of the whole of a virtual network controlled by a plurality of controllers which use an OpenFlow technology.

### Brief Description of Drawings

Objectives, effects and features of the above-described invention will be made more apparent from the description of exemplary embodiments in cooperation with the attached drawings in which:
Fig. 1 is a diagram illustrating the configuration of a computer system according to the present invention in an exemplary embodiment;
Fig. 2 is a diagram illustrating the configuration of an OpenFlow controller according to the present invention in an exemplary embodiment;
Fig. 3 is a diagram illustrating one example of VN topology data held by the OpenFlow controller according to the present invention;
Fig. 4 is a conceptual diagram of the VN topology data held by the OpenFlow controller according to the present invention;
Fig. 5 is a diagram illustrating the configuration of a managing unit according to the present invention in an exemplary embodiment;
Fig. 6 is a diagram illustrating one example of virtual node data held by the managing unit according to the present invention;
Fig. 7 is a diagram illustrating another example of virtual node data held by the managing unit according to the present invention;
Fig. 8 is a diagram illustrating one example of the VN topology data held by each of the OpenFlow controllers illustrated in Fig. 1; and
Fig. 9 is a diagram illustrating one example of VTN topology data of the whole of a virtual network generated by unifying the VN topology data illustrated in Fig. 8.

### Description of Exemplary Embodiments

In the following, a description is given of exemplary embodiments of the present invention with reference to the attached drawings. The same or similar reference numerals denote the same, similar or equivalent components in the drawings.

### (Computer System Configuration)

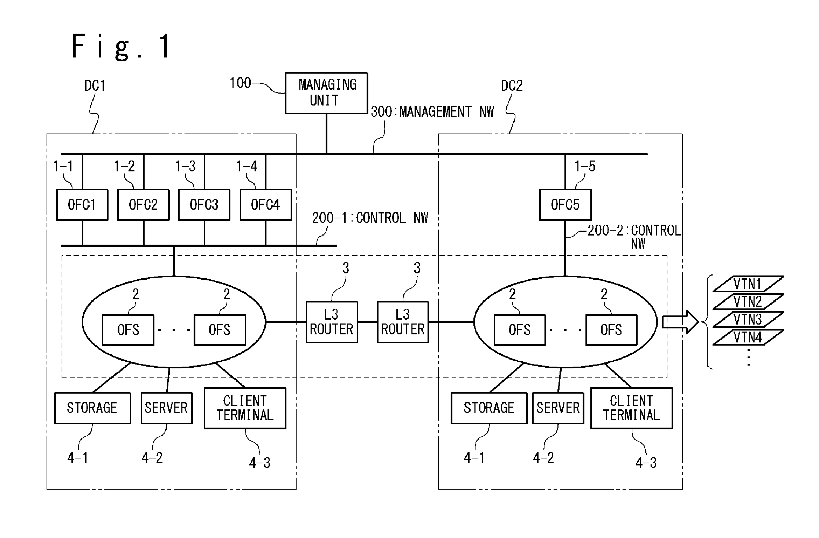

The configuration of a computer system according to the present invention is described with reference to Fig. 1. Fig. 1 is a diagram illustrating the configuration of a computer system according to the present invention in an exemplary embodiment. The computer system according to the present invention uses OpenFlow to perform establishment of communication routes and transfer control of packet data. The computer system according to the present invention includes: OpenFlow controllers 1-1 to 1-5 (hereinafter, referred to as OFCs 1-1 to 1-5), a plurality of OpenFlow switches 2 (hereinafter, referred to as OFSs 2), a plurality of L3 routers 3, a plurality of hosts 4 (e.g., storages 4-1, servers 4-2 and client terminals 4-3) and a managing unit 100. It should be noted that the OFCs 1-1 to 1-5 may be collectively referred to as OFCs 1, if they are not distinguished between each other.

The hosts 4, which are computer apparatuses including a not-shown CPU, main storage and auxiliary storage, each communicate with other hosts 4 by executing programs stored in the auxiliary storage. Communications between hosts 4 are achieved via the switches 2 and the L3 routers 3. The hosts 4 implements their own functions of the storages 4-1, servers (e.g., web servers, file servers and application servers) and the client terminals 4-3, for example, depending on the programs executed therein and their hardware configurations.

The OFCs 1 each include a flow control section 12 which controls communication route packet transfer processing related to packet transfer in the system, on the basis of an OpenFlow technology. The OpenFlow technology is a technology in which controllers (the OFCs 1 in this exemplary embodiment) set multilayer routing data in units of flows onto the OFSs 2 in accordance with a routing policy (flow entries: flow and action), to achieve a route control and node control (see non-patent literature 1 for details). This separates the route control function from the routers and switches, allowing optimized routing and traffic management through a centralized control by the controllers. The OFSs 2 to which the OpenFlow technology is applied handle communications as end-to-end flows rather than in units of packets or frames, differently from conventional routers and switches.

The OFCs 1 control the operations of OFSs 2 (e.g., relaying of packet data) by setting flow entries (rules and actions) into flow tables (not shown) held by the OFSs 2. The setting of flow entries onto the OFSs 2 by the OFCs 1 and notifications of first packets (packet-in) from the OFSs 2 to the OFCs 13 are performed via control networks 200 (hereinafter referred to as control NWs 200).

In one example illustrated in Fig. 1, the OFCs 1-1 to 1-4 are disposed as OFCs 1 which control the network (the OFSs 2) in a data center DC1 and the OFC 1-5 is disposed as an OFC 1 which controls the network (the OFSs 2) in a data center DC2. The OFCs 1-1 to 1-4 are connected to the OFSs 2 in the data center DC1 via a control NW 200-1 and the OFC 1-5 is connected to the OFSs 2 in the data center DC2 via a control NW 200-2. Note that the network (OFSs 2) of the data center DC1 and the network (OFSs 2) of the data center DC2 are networks (subnetworks) of different ID address ranges connected via the L3 routers 3, which performs Layer 3 routing.

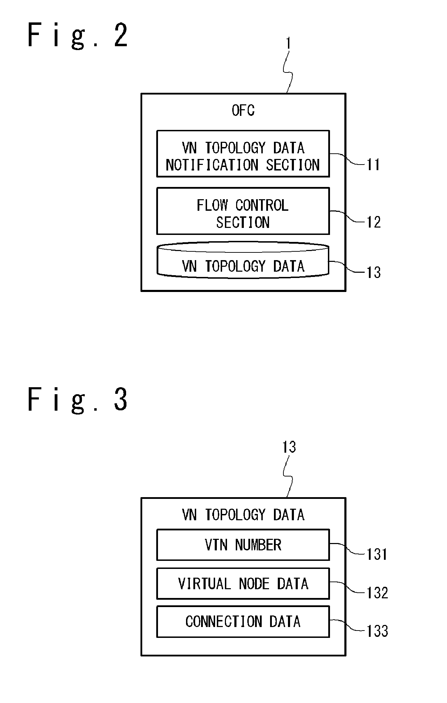

Referring to Fig. 2, details of the configuration of the OFCs 1 are described in the following. Fig. 2 is a diagram illustrating the configuration of the OFCs 1 according to the present invention. It is preferable that the OFCs 1 are embodied as a computer including a CPU and storage device. In each OFC 1, the respective functions of a VN topology data notification section 11 and flow control section 12 illustrated in Fig. 2 are implemented by executing programs stored in the storage device by the not-shown CPU. Also, each OFC 1 holds VN topology data 13 stored in the storage device.

The flow control section 12 performs setting and deletion of flow entries (rules and actions) for OFSs 2 to be managed by the flow control section 12 itself. In this operation, the flow control section 12 sets the flow entries (rules and action data) into flow tables of the OFSs 2 so that the flow entries are correlated with the controller ID of the OFC 1. The OFSs 2 refer to the flow entries set thereto to perform the action (e.g., relaying or discarding of packet data) associated with the rule matching the header data of a received packet. Details of the rules and actions are described in the following.

Specified in a rule is, for example, a combination of addresses and identifiers defined in Layers 1 to 4 of the OSI (open system interconnection) model, which are included in header data in TCP/IP packet data. For example, a combination of a physical port defined in Layer 1, a MAC address and VLAN tag (VLAN id) defined in Layer 2, an IP address defined in Layer 3 and a port number defined in Layer 4 may be described in a rule. Note that the VLAN tag may be given a priority (VLAN priority).

An identifier, address and the like described in a rule, such as a port number, may be specified as a certain range. It is preferable that the source and destination are distinguished with respect to an address or the like described in a rule. For example, a range of the destination MAC address, a range of the destination port number identifying the connection-destination application, a range of the source port number identifying the connection-source application may be described in a rule. Furthermore, an identifier specifying the data transfer protocol may be described in a rule.

Specified in an action is, for example, how to handle TCP/IP packet data. For example, data indicating whether to relay received packet data or not, and if so, the destination may be described in an action. Also, data to instruct duplication or discarding of packet data may be described in an action.

A predetermined virtual network (VN) is built for each OFC 1 through a flow control by each OFC 1. In addition, one virtual tenant network (VTN) is built with at least one virtual network (VN), which is individually managed by an OFC 1. For example, one virtual tenant network VTN1 is built with the virtual networks respectively managed by OFCs 1-1 to 1-5, which control different IP networks. Alternatively, one virtual tenant network VTN2 may be built with virtual networks respectively managed by OFCs 1-1 to 1-4, which control the same IP network. Furthermore, one virtual tenant network VTN3 may be composed of a virtual network managed by one OFC 1 (e.g. the OFC 1-5). It should be noted that a plurality of virtual tenant networks (VTNs) may be built in the system, as illustrated in Fig. 1.

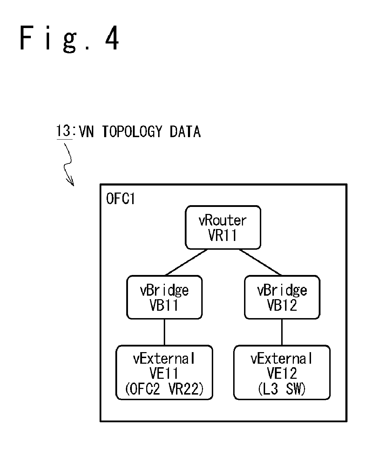

The VN topology data notification section 11 transmits VN topology data 13 of the virtual network (VN) managed by the VN topology data notification section 11 itself to the managing unit 100. As illustrated in Figs. 3 and 4, the VN topology data 13 include data related to the topology of the virtual network (VN) managed (or controlled) by the OFC 1. Referring to Fig. 1, in the computer system according to the present invention a plurality of virtual tenant networks VTN1, VTN2... are provided by the controls by a plurality of OFCs 1. The virtual tenant networks include virtual networks (VN) respectively managed (or controlled) by the OFCs 1-1 to 1-5. Each OFC 1 holds data related to the topology of the virtual network managed by the OFC 1 itself (hereinafter, referred to as management target virtual network) as the VN topology data 13.

Fig. 3 is a diagram illustrating one example of the VN topology data 13 held in an OFC 1. Fig. 4 is a conceptual diagram of the VN topology data 13 held in the OFC 1. The VN topology data 13 include data related to connections among virtual nodes in a virtual network embodied by OFSs 2 and physical switches, such as not-shown routers. Specifically, the VN topology data 13 include data identifying virtual nodes belonging to the management target virtual network (virtual node data 132) and connection data 133 indicating the connections among the virtual nodes. The virtual node data 132 and connection data 133 are recorded to be correlated with a VTN number 131, which is an identifier of a virtual network belonging to the management target virtual network (for example, a virtual tenant network).

The virtual node data 132 include, for example, data identifying respective virtual bridges, virtual externals and virtual routers as virtual nodes. The virtual external is a terminal (host) or router which operates as a connection destination of a virtual bridge. The virtual node data 132 may be defined, for example, with combinations of the names of the VLANs to which virtual nodes are connected and MAC addresses (or port numbers). In one example, the identifier of a virtual router (virtual router name) is described in the virtual node data 132 with the identifier of the virtual router correlated with a MAC address (or a port number). The virtual node names, such as virtual bridge names, virtual external names and virtual router names, may be defined to be specific to each OFC 1 in the virtual node data 132; alternatively, common names may be defined for all the OFCs 1 in the system.

The connection data 133 include data identifying connection destinations of virtual nodes, correlated with the virtual node data 132 of the virtual nodes. Referring to Fig. 4, for example, a virtual router (vRouter) "VR11" and a virtual external (vExternal) "VE11" may be described as the connection destination of the virtual bridge (vBridge) "VB11" in the connection data 133. The connection data 133 may include a connection type identifying the connection counterpart (bridge/external/ router/external network (L3 router)) or data identifying the connection destination (e.g., the port number, the MAC address and the VLAN name). In detail, the identifier of a virtual bridge (virtual bridge name) is described in the connection data 133 with the described identifier correlated with the name of the VLAN to which the virtual bridge belongs. Furthermore, the identifier of a virtual external (virtual external name) is described in the connection data 133 with the described identifier correlated with a combination of the VLAN name and the MAC address (or the port number). In other words, a virtual external is defined with a VLAN name and a MAC address (or a port number).

Referring to Fig. 4, one example of a virtual network established on the basis of VN topology data 13 held by an OFC 1 is described in the following. The virtual network illustrated in Fig. 4 belongs to the virtual tenant network VTN1 and is composed of a virtual router "VR11", virtual bridges "VB11" and "VB12" and virtual externals "VE11" and "VE12". The virtual bridges "VB11" and "VB12" represent different subnetworks connected via the virtual router "VR11". The virtual bridge "VB11" is connected to the virtual external "VE11" and the virtual external "VE11" is associated with the MAC address of a virtual router "VR22" managed by the OFC 1-2 named "OFC2". This implies that the MAC address of the virtual router "VR22", which is managed by the OFC 1-2 named "OFC2", is recognizable from the virtual bridge "VB11". Similarly, the virtual bridge "VB12" is connected to the virtual external "VE12" and the virtual external "VE12" is associated with an L3 router. This implies that the virtual bridge "VB12" is connected to an external network via the L3 router.

Referring to Fig. 1, the VN topology data notification section 11 transmits the VN topology data 13 managed by the VN topology data notification section 11 itself to the managing unit 100 via a secure management network 300 (hereinafter, referred to as management NW 300). The managing unit 100 combines the VN topology data 14 obtained from the OFCs 1-1 to 1-5 on the basis of the virtual node data 105 to generate a virtual network of the whole system (e.g., the virtual tenant networks VTN1, VTN2...)

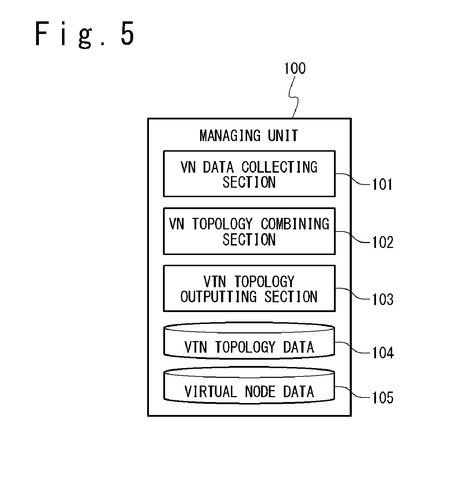

Referring to Fig. 5, details of the configuration of the managing unit 100 is described in the following. Fig. 5 is a diagram illustrating the configuration of the managing unit 100 according to the present invention in an exemplary embodiment. It is preferable that the managing unit 100 is embodied as a computer including a CPU and storage device. In the managing unit 100, the respective functions of a VN data collecting section 101, a VN topology combining section 102 and a VTN topology outputting section 103 by executing a visualization program stored in the storage device by the not-shown CPU. In addition, the managing unit 100 holds VTN topology data 104 and virtual node data 105 stored in the storage device. It should be noted that the VTN topology data 104 are not recorded in the initial state; the VTN topology data 104 are recorded only after generated by the VN topology combining section 102. It is preferable, on the other hand, that the virtual node data 105 are preset in the initial state.

The VN data collecting section 101 issues VN topology data collection instructions to the OFCs 1 via the management NW 300 to obtain the VN topology data 13 from the OFCs 1. The VN topology data 13 thus obtained are temporarily stored in the not-shown storage device.

The VN topology combining section 102 combines (or unifies) the obtained VN topology data 13 on the basis of the virtual node data 105 in units of virtual networks defined over the whole system (e.g., in units of virtual tenant networks) to generate topology data corresponding to virtual networks defined over the whole system. The topology data generated by the VN topology combining section 102 are recorded as VTN topology data 104 and outputted by the VTN topology outputting section 103 in a visually perceivable form. For example, the VTN topology outputting section 103 displays the VTN topology data 104 on an output device (not shown) such as a monitor in a text style or in a graphical style. The VTN topology data 104, which has a similar configuration to the VN topology data 13 illustrated in Fig. 3, include virtual node data and connection data associated with VTN numbers.

On the basis of the VN topology data 13 obtained from the OFCs 1 and the virtual node data 105, the VN topology combining section 102 identifies a common (or the same) virtual node out of the virtual nodes on the management target virtual networks of the individual OFCs 1. The VN topology combining section 102 combines the virtual networks to which the common virtual node belongs, via the common virtual node. In this operation, when combining virtual networks (subnetworks) of the same IP address range, the VN topology combining section 102 combines the virtual networks via a common virtual bridge shared by the instant networks. When combining virtual networks (subnetworks) of different IP address ranges, the VN topology combining section 102 combines the virtual networks via a virtual external shared by the networks.

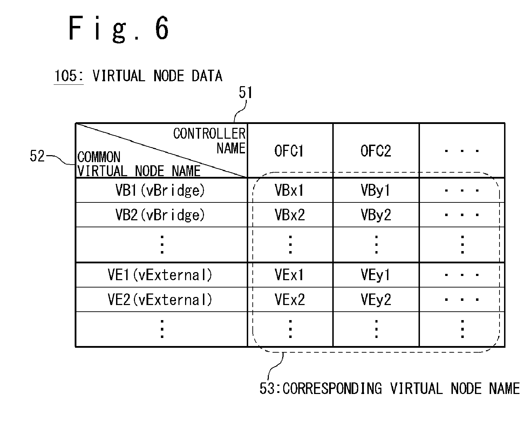

The virtual node data 105 are data which correlate virtual node names individually defined in the respective OFCs 1 with the same virtual node. Fig. 6 is a diagram illustrating one example of the virtual node data 105 held by the managing unit 100 according to the present invention. The virtual node data 105 illustrated in Fig. 6 include controller names 51, common virtual node names 52 and corresponding virtual node names 53. In detail, the virtual node names corresponding to the same virtual node out of virtual node names individually defined in the respective OFCs are recorded as the corresponding virtual node names 53, correlated with the common virtual node name 52. In the example illustrated in Fig. 6, a virtual bridge "VBx1" defined in the OFC 1 with a controller name 51 of "OFC1" and a virtual bridge "VBy1" defined in the OFC 1 with a controller name 51 of "OFC2" are described in the virtual node data 105, correlated with a common virtual node name "VB1". In this case, the VN topology combining section 102 can recognize that the virtual bridge "VBx1" described in the VN topology data 13 received from the OFC 1 named "OFC1" and the virtual bridge "VBy1" described in the VN topology data 13 received from the OFC 1 named "OFC2" are the same virtual bridge "VB1", by referring to the virtual node data 105 by using the controller name 51 and the corresponding virtual node name 53 as keys. Similarly, the VN topology combining section 102 can recognize that the virtual bridge "VBx2" defined in the OFC1 named "OFC1" and the virtual bridge "VBy2" defined in the OFC 1 named "OFC2" are the same virtual bridge "VB2", by referring to the virtual node data 105 illustrated in Fig. 6. In addition, a virtual external "VEx1" defined in the OFC 1 named "OFC1" and a virtual external "VEx2" defined in the OFC 1 named "OFC2" are described in the virtual node data 105, correlated with a common virtual node name "VE1". In this case, the VN topology combining section 102 can recognize that the virtual external "VEx1" described in the VN topology data 13 received from the OFC 1 named "OFC1" and the virtual external "VEy1" described in the VN topology data 13 received from the OFC 1 named "OFC2" are the same virtual external "VE1", by referring to the virtual node data 105. In the same way, the VN topology combining section 102 can recognize a virtual external "VEx2" defined in the OFC 1 named "OFC1" and a virtual external "VEy2" defined in the OFC 1 named "OFC2" as the same virtual bridge "VE2", by referring the virtual node data 105 illustrated in Fig. 6.

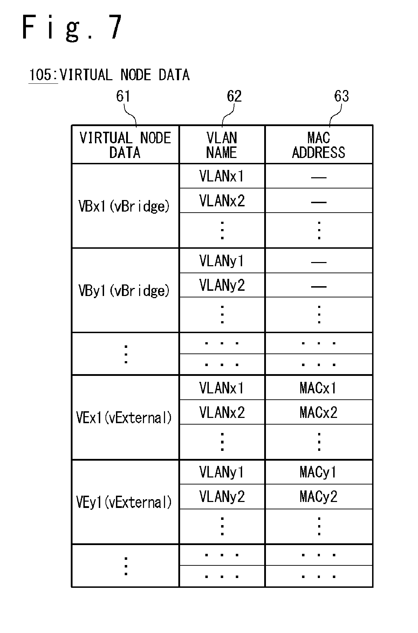

Fig. 7 is a diagram illustrating another example of the virtual node data 105 held by the managing unit 100 according to the present invention. The virtual node data 105 illustrated in Fig. 7 include virtual node names 61, VLAN names 62 and MAC addresses 63. In detail, VLANs to which virtual nodes belong and MAC addresses which belong to the virtual nodes are described as the virtual node data 105, correlated with the name (the virtual node name 61) of the virtual nodes. When the virtual node data 105 have been registered as illustrated in Fig. 7, the VN data collecting section 101 collects virtual node data 132 including the names of VLANs to which virtual nodes belong and MAC addresses which belong to the virtual nodes, from the OFCs 1. The VN topology combining section 102 identifies virtual node names 61 by referring to the virtual node data 105, using the VLAN names and MAC addresses included in the virtual node data 132 received from the OFCs 1 as keys, and correlates the identified virtual node names with the virtual node names included in the virtual node data 132. This allows the VN topology combining section 102 to recognize that the virtual nodes with the same virtual node name 61 identified by the VLAN names and MAC addresses are the same virtual node, even when the virtual node names obtained from different OFCs are different.

### (Combining (Unifying) Operation of Virtual Networks)

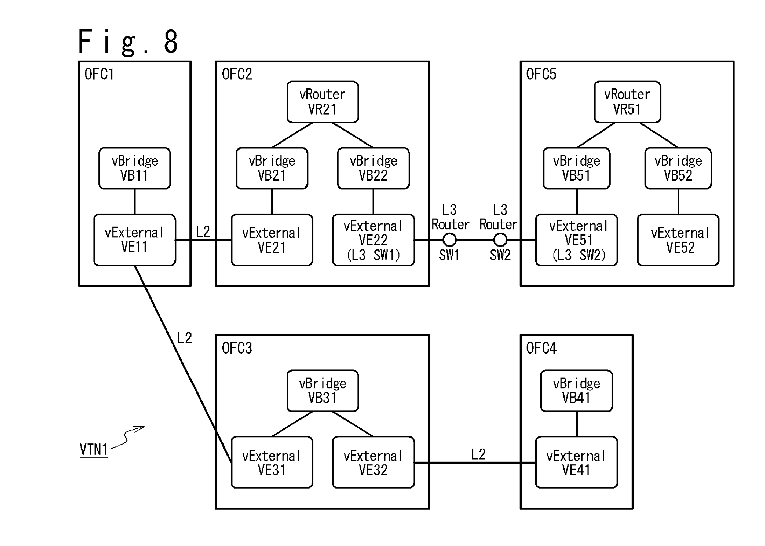

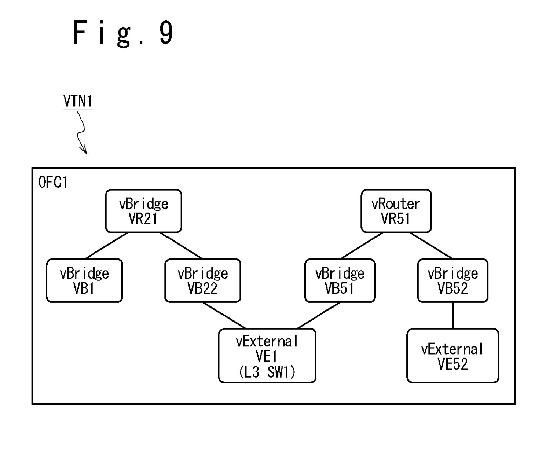

Next, details of the combining operation of virtual networks in the managing unit 100 are described with reference to Figs. 8 and 9. Fig. 8 is a diagram illustrating one example of the VN topology data 13 of virtual networks belonging to the virtual tenant network VTN1, wherein the VN topology data 13 are respectively held by the OFCs 1-1 to 1-5 illustrated in Fig. 1.

Referring to Fig. 8, The OFC 1-1 named "OFC1" holds a virtual bridge "VB11" and a virtual external "VE11", which are connected with each other, as the VN topology data 13 of the management target virtual network of the OFC 1-1 itself. The OFC 1-2 named "OFC2" holds a virtual router "VR21", virtual bridges "VB21" and "VB22" and virtual externals "VE21" and "VE22" as the VN topology data 13 of the management target virtual network of the OFC 1-2 itself. The virtual bridges "VB21" and "VB22" represent different subnetworks connected via the virtual router "VR21". The virtual bridge "VB21" is connected to the virtual external "VE21". The virtual bridge "VB22" is connected to the virtual external "VE22" and the virtual external "VE22" is associated with an L3 router "SW1". The OFC 1-3 named "OFC3" holds a virtual bridge "VB31" and virtual externals "VE31" and "VE32" as the VN topology data 13 of the management target virtual network of the OFC 1-3 itself. The OFC 1-4 named "OFC4" holds a virtual bridge "VB41" and a virtual external "VE41" as the VN topology data 13 of the management target virtual network of the OFC 1-4 itself. The OFC 1-5 named "OFC5" holds a virtual router "VR51", virtual bridges "VB51" and "VB52" and virtual externals "VE51" and "VE52" as the VN topology data 13 of the management target virtual network of the OFC 1-5 itself. The virtual bridges "VB51" and "VB52" represent different subnetworks connected via the virtual router "VR51". The virtual bridge "VB51" is connected to the virtual external "VE51" and the virtual external "VE51" is associated with an L3 router "SW2". The virtual bridge "VB52" is connected to the virtual external "VE52".

The VN data collecting section 101 of the managing unit 100 issues VN topology data collection instructions with respect to the virtual tenant network "VTN1", to the OFCs 1-1 to 1-5. The OFCs 1-1 to 1-5 each transmit the VN topology data 13 related to the virtual tenant network "VTN1" to the managing unit 100 via the management NW 300. This allows the managing unit 100 to collect the VN topology data 13, for example, as illustrated in Fig. 8, from the respective OFCs 1-1 to 1-5. The VN topology combining section 102 of the managing unit 100 identifies common virtual nodes in the collected VN topology data 13 by referring to the virtual node data 105. In this exemplary embodiment, it is assumed that, in the virtual node data 105, the virtual bridges "VB11", "VB21", "VB31" and "VB41" are registered and correlated with a virtual bridge "VB1" and the virtual external "VE22" and "VB51" are registered and correlated with a virtual external "VE1". When finding that virtual bridges on two virtual networks are correlated by referring to the virtual node data 105, the VN topology combining section 102 acknowledges that the two virtual networks are connected via a Layer 2 connection. In this case, the VN topology combining section 102 combines the two virtual networks via the correlated virtual bridges. In this example, on the basis of the virtual node data 105, the VN topology combining section 102 connects the virtual bridges "VB11", "VB21", "VB31" and "VB41", which are correlated with each other, to the virtual router "VR21", defining the virtual bridges "VB11", "VB21", "VB31" and "VB41" as the same virtual bridge "VB1". Also, when finding that virtual externals on two virtual networks are correlated by referring to the virtual node data 105, the VN topology combining section 102 acknowledges that the two virtual networks are connected via a Layer 3 connection. In this case, the VN topology combining section 102 combines the two virtual networks via the correlated virtual externals. In this example, since the virtual externals "VE22" and "VE51" are correlated with each other, the VN topology combining section 102 connects the virtual bridges "VB22" and "VB51" with each other, defining the virtual external "VE22" and "VE51" as the same virtual external "VE1". As described above, the VN topology combining section 102 combines (or unifies) the VN topology data 13 defined in the respective OFCs 1 as illustrated in Fig. 8 to generate and record topology data (VTN topology data 104) of the whole of the virtual tenant network "VTN1" illustrated in Fig. 9.

The VTN topology data 104 thus generated are outputted in a visually perceivable form as illustrated in Fig. 9. This allows the network administrator to perform centralized management of the topology of a virtual network defined over the whole of the system illustrated in Fig. 1.

Although exemplary embodiments of the present invention are described above in detail, the specific configuration is not limited to the above-described exemplary embodiments; the present invention encompasses modifications which do not depart from the scope of the present invention. For example, although the managing unit 100 is illustrated in Fig. 1 as being disposed separately from the OFCs 1, the implementation is not limited to this configuration; the managing unit 100 may be mounted in any of the OFCs 1-1 to 1-5. Although a computer system including five OFCs is illustrated in Fig. 1, the numbers of the OFCs 1 and host 4 connected to the network are not limited to those illustrated in Fig. 1.

It should be noted that the present application is based on Japanese Patent Application No. 2012-027779 and the disclosure of Japanese Patent Application No. 2012-027779 is incorporated herein by reference.

## Claims

1. A computer system, comprising:
a plurality of controllers, each of which calculates communication routes and sets flow entries onto switches on said communication routes;
switches which perform relaying of received packet in accordance with said flow entries set in flow tables of the switches; and
a managing unit which outputs a plurality of virtual networks managed by said plurality of controllers in a visually perceivable form with the plurality of virtual networks combined, based on topology data of the virtual networks, the topology data being generated based on said communication routes.

2. The computer system according to claim 1, wherein said managing unit holds virtual node data identifying virtual nodes constituting said virtual networks and identifies a common virtual node shared by said plurality of virtual networks based on said topology data and said virtual node data to combine said plurality of virtual networks via said common virtual node.

3. The computer system according to claim 2, wherein said virtual nodes include virtual bridges,
wherein a combination of corresponding virtual bridges of said plurality of virtual bridges is described in said virtual node data, and
wherein said managing unit identifies a common virtual bridge shared by said plurality of virtual networks based on said topology data and said virtual node data to combine said plurality of virtual networks via said common virtual node.

4. The computer system according to claim 3, wherein said virtual nodes includes virtual externals which are recognized as connection destinations of said virtual bridges,
wherein a combination of corresponding virtual externals of said plurality of virtual externals is described in said virtual node data, and
wherein said managing unit identifies a common virtual external shared by said plurality of virtual networks based on said topology data and said virtual node data to combine said plurality of virtual networks via said common virtual external.

5. The computer system according to claim 2,
wherein virtual nodes and VLAN names are described to be correlated in said virtual node data, and
wherein said managing unit identifies a common virtual node shared by said plurality of virtual networks based on VLAN names included in said topology data and said virtual node data to combine said plurality of virtual networks via said common virtual node.

6. The computer system according to any one of claims 1 to 5, wherein said managing unit is mounted on any of said plurality of controllers.

7. A virtual network visualization method implemented on a computer system including:
a plurality of controllers which each calculate communication routes and set flow entries onto switches on said communication routes; and
switches which perform relaying of received packets in accordance with said flow entries set in flow tables of the switches, said method comprising steps of:
by a managing unit, obtaining topology data of said plurality of virtual networks managed by said plurality of controllers, from said plurality of controllers; and
by said managing unit, outputting said plurality of virtual networks in a visually perceivable form with said plurality of virtual networks combined, based on the topology data of said respective virtual networks.

8. The visualization method according to claim 7, wherein said managing unit holds virtual node data identifying virtual nodes constituting said virtual networks, and
wherein the step of outputting said plurality of virtual networks in the visually perceivable form with the plurality of virtual networks combined includes steps of:
by said managing unit, identifying a common virtual node shared by said plurality of virtual networks based on said topology data and said virtual node data; and
by said managing unit, combining said plurality of virtual networks via said common virtual node.

9. The visualization method according to claim 8, wherein said virtual nodes include virtual bridges,
wherein a combination of corresponding virtual bridges of said plurality of virtual bridges is described in said virtual node data, and
wherein the step of outputting said plurality of virtual networks in the visually perceivable form with the plurality of virtual networks combined includes steps of:
by said managing unit, identifying a common virtual bridge shared by said plurality of virtual networks based on said topology data and said virtual node data; and
by said managing unit, combining said plurality of virtual networks via said common virtual node.

10. The visualization method according to claim 9, wherein said virtual nodes includes virtual externals which are recognized as connection destinations of said virtual bridges,
wherein a combination of corresponding virtual externals of said plurality of virtual externals is described in said virtual node data, and
wherein the step of outputting said plurality of virtual networks in the visually perceivable form with the plurality of virtual networks combined includes steps of:
by said managing unit, identifying a common virtual external shared by said plurality of virtual networks based on said topology data and said virtual node data; and
by said managing unit, combining said plurality of virtual networks via said common virtual external.

11. The visualization method according to claim 8, wherein virtual nodes and VLAN names are described to be correlated in said virtual node data,
wherein the step of outputting said plurality of virtual networks in the visually perceivable form with the plurality of virtual networks combined includes steps of:
by said managing unit, identifying a common virtual node shared by said plurality of virtual networks based on VLAN names included in said topology data and said virtual node data; and
by said managing unit, combining said plurality of virtual networks via said common virtual node.

12. A recording device in which a visualization program is recorded, the visualization program causing a computer to implement the visualization method set forth in any one of claims 7 to 11.
